# EUROPEAN PATENT SPECIFICATION

(11) **EP 3 670 623 B1**
(45) Date of publication and mention of the grant of the patent: **10.09.2025**
(21) Application number: 18214508.6
(22) Date of filing: 20.12.2018
(51) Int. Cl.: C09J 7/38

(54) **USE OF PRESSURE-SENSITIVE ADHESIVE TAPE FOR TEMPORARY PROTECTION OF COATED GLASS SUBSTRATES, METHODS OF PRODUCING GLASS UNITS AND RELATED GLASS UNITS**
VERWENDUNG VON DRUCKEMPFINDLICHEM KLEBEBAND ZUM SCHUTZ VON BESCHICHTETEM GLAS, VERFAHREN ZUR HERSTELLUNG VON GLASEINHEITEN UND ENTSPRECHENDE GLASEINHEITEN
UTILISATION D'UN RUBAN ADHÉSIF SENSIBLE À LA PRESSION POUR LA PROTECTION DU VERRE REVÊTU, MÉTHODES DE PRODUCTION D'UNITÉS DE VERRE ET UNITÉS DE VERRE ASSOCIÉES

(43) Date of publication of application: 24.06.2020
(73) Proprietor: NITTO BELGIUM N.V, 3600 Genk (BE)
(72) Inventor: SCHURGERS, Ben, 3600 Genk (BE)
(74) Representative: Grünecker Patent- und Rechtsanwälte PartG mbB

(56) References cited:
- EP-A1- 3 006 533
- EP-A1- 3 050 927
- WO-A1-2011/152511
- WO-A1-2013/162056

## Description

### FIELD OF INVENTION

This invention relates to the use of a multilayer pressure-sensitive adhesive tape for temporary protection of low-E coated glass. In further aspects, the present invention relates to a method of producing a glass unit by using said pressure-sensitive adhesive tape and to related glass units.

### BACKGROUND OF THE INVENTION

During the last decades, there has been a growing interest into functional glass coatings, particularly in the manufacture of energy-efficient insulating glass (IG) window units. For instance, Low-E (low emissivity) coatings have been developed to minimize the amount of ultraviolet and infrared light that can pass through glass without compromising the amount of visible light that is transmitted, thus being capable of providing an effective solar management coating. Low-E coated windows are assemblies commonly comprising a glass sheet covered with a system of thin layers comprising multiple functional layers based on an IR radiation reflecting material (e.g., nanolayers of silver) and dielectric coatings (such as thin transparent layers metal oxides and/or nitrides, for example), wherein each functional layer is typically surrounded by dielectric layers.

In the conventional manufacturing of IG units, the aforementioned functional layers of Low-E coatings are typically deposited onto the surface of a glass substrate by means of vacuum deposition techniques such as magnetron sputtering, for example. It is known to dust the surfaces of the coated glass sheets with interleaving powder, followed by wrapping of multiple dusted sheets into racks in order to protect the coated sheets during storage and transport to the IG unit manufacturer. However, interleaving powders do not offer sufficient protection against damages due to rubbing, abrasion, impurities and particularly corrosion of the coatings due to high humidity and/or chemicals present in the environment or used during handling or processing of the coated glass sheets (such as cutting fluids, for example). Moreover, at this stage, even slight damages may result in an inacceptable appearance and to poor performance in the final product, since blemishes and local corrosion tend to be magnified upon thermal treatment of the coated glass.

In order to overcome said disadvantages, a number of protective coatings and films have been proposed, which are applied onto the Low-E coating after deposition onto the glass substrate.

To this end, US 2002/176988 A1 discloses a technique, wherein an aqueous coating composition containing a PVA polymer is applied onto the coated glass sheet and subsequently cured. Since this coating is water-soluble, however, the Low-E coated sheet is still exposed to potential damage and corrosion after removing the temporary protection film during washing procedures typically employed in the processing of the coated glass.

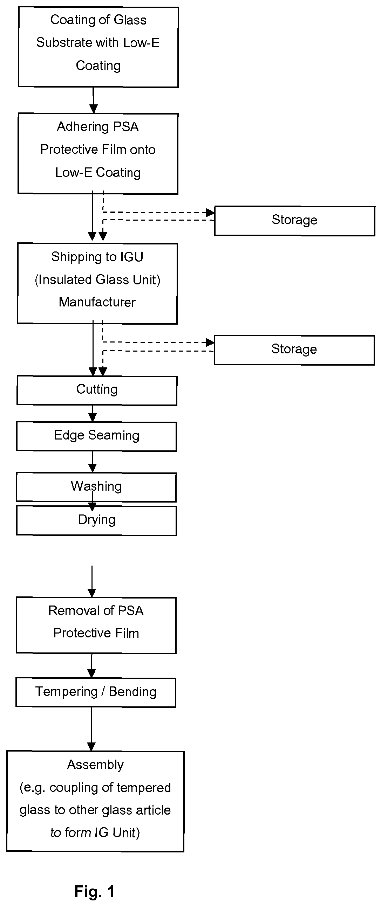

A preferred alternative to protective coatings applied in liquid form is the use of pressure-sensitive adhesive (PSA) sheets as protective materials. As is illustrated in Fig. 1, such protective sheets may be usually left on the coated glass substrate during the further processing of the sheets (which may include cutting, edge seaming, washing and drying steps) and removed from the coated glass before subjecting the same to thermal treatment (i.e tempering) and/or optional bending, which may be followed by the final assembly steps (e. g. coupling the tempered Low-E coated glass with another glass sheet to form the IG unit).

As a material suitable for this process, WO 2005/100276 A1 discloses protective sheets including a polyethylene film covered with a pressure-sensitive adhesive comprising an acrylic based material, which is typically applied by solution deposition techniques. However, the therein disclosed sheets are only available in relatively small dimensions (i.e. a width of 2.85 m or less), so that in order to protect larger glass substrates, at least two of the protective sheets have to be applied in a juxtaposed or overlapping manner. Since it has been found that the coated glass is susceptible to mechanical damage and corrosion at the areas surrounding the joint, WO 2008/153622 A1 proposes the additional application of a liquid protective coating at the joint, which, however, renders the processing laborious and expensive.

In order to overcome these disadvantages, WO 2016/139318 A1 discloses temporary surface protective adhesive sheets based on non-acrylic pressure-sensitive adhesive layers and protective polyolefin substrate layers, which may be produced in widths larger than 2.85 m. Specifically, WO 2016/139318 A1 proposes the use of adhesives based on styrene-based copolymers (e.g. styrene/ethylene-butylene/styrene (SEBS)), polyisobutylene, ethylene-vinyl acetate (EVA), or polyethylene (PE).

However, the protective sheets disclosed therein exhibit adhesion properties which are detrimental to their removability and handling. Specifically, it has been found that adhesives based on styrene-based copolymers (such as SEBS, for example) often leave stains on the Low-E coating upon removal. In addition, they tend to build up strong adhesion over time, which renders the peel-off procedure difficult, especially if the coated glass has been stored for extended periods. This effect is further intensified upon exposure to UV radiation. On the other hand, reducing the initial adhesive strength of SEBS-based adhesives (e.g. by increasing their weight-average molecular weight) often leads to a viscosity mismatch with the substrate layer, which may severely limit or impede the manufacturing process (e.g. by co-extrusion). Moreover, it is desirable that the protective film may be peeled off (manually or in an automated manner) at a high speed in order to improve the efficiency of IG manufacturing procedure. In this respect, the adhesion strength of SEBS-based adhesive films at higher peel speeds is relatively high, which - in combination with the aforementioned adhesion build-up - renders the protective sheets susceptible to anchorage failure during the peeling process.

Adhesive layers based on combinations of polyolefins and tackifier resins usually exhibit a lower adhesion build-up during prolonged periods, but tend to show an undesirable peel strength increase at higher peel speeds. In addition, as has also been observed with EVA-based adhesive sheets, their initial adhesion strength is often too high to enable efficient and simple removal.

In view of the above, there exists a need to provide a pressure-sensitive adhesive tape which effectively protects coated glass surfaces from corrosion and mechanical and chemical damage during IG manufacturing, provides for a prolonged storability of the coated glass substrate, enables simple and swift removal without anchorage failure, blocking or residues, and which may be produced in large dimensions. In view of the demands of the IG unit manufacturing method illustrated by Fig. 1, it would be further desirable to provide a PSA tape which exhibits excellent weatherability (e.g. resistance against UV radiation, moisture, oxygen exposure and/or elevated temperatures), is resistant towards processing chemicals (e.g. cutting oils and/or fluids) and maintains favourable adhesion properties even after or during submersion under water or other (washing) fluids. Pressure-sensitive adhesive tapes comprising acrylic copolymers to be applied as surface protection films are disclosed in WO 2013/162056 A1, EP 3 050 927 A1, EP 3 006 533 A1 and WO 2011/152511 A, for example. However, the application of such films as protective films for coated glass surfaces is not disclosed or suggested therein.

### SUMMARY OF THE INVENTION

The present invention solves at least some of these objects with the subject matter of the claims as defined herein. Further advantages of the present invention will be further explained in detail in the section below.

In a first embodiment, the present invention relates to a method of producing a glass unit, the method comprising: providing a low emissivity layer on a glass substrate; adhering a pressure-sensitive adhesive tape to the top surface of the low emissivity layer; an optional step of cutting, edge seaming, grinding, washing and/or drying the low-emissivity coated glass with the pressure-sensitive adhesive tape adhered thereto; and removing the pressure-sensitive adhesive tape from low-emissivity layer to provide the glass unit, wherein the pressure-sensitive adhesive tape comprises a carrier layer and a pressure-sensitive adhesive layer, the pressure-sensitive adhesive layer comprising one or more acrylic block copolymers.

In a second embodiment, the present invention relates to the use of said pressure-sensitive adhesive tape as a protective sheet for low-emissivity coated glass is described.

In a third embodiment, the present invention relates to a glass unit comprising a glass substrate with a low emissivity coating and said pressure-sensitive adhesive tape provided on the low emissivity coating for temporary protection..

Preferred embodiments of the present invention and other aspects of the present invention are described in the following description and the claims.

### BRIEF DESCRIPTION OF THE DRAWINGS

Fig. 1 illustrates an exemplary manufacturing procedure for insulating glass employing low-E coated glass substrates.
Fig. 2 illustrates a preferred PSA tape configuration as used according to the present invention.
Fig. 3 illustrates an exemplary blow film coextrusion process.
Fig. 4 shows the results of adhesive strength measurements upon applying sample tapes on BA steel surfaces.
Fig. 5 shows the results of adhesive strength measurements upon applying sample tapes on low-E coated glass surface.
Fig. 6 shows adhesive strength increase of samples after prolonged storage.
Fig. 7 shows the results of adhesive strength measurements depending on peel speed.

### DETAILED DESCRIPTION OF THE INVENTION

For a more complete understanding of the present invention, reference is now made to the following description of the illustrative embodiments thereof:

In a first embodiment, the present invention relates to a method of producing a glass unit, the method comprising: providing a low emissivity layer on a glass substrate; adhering a pressure-sensitive adhesive tape to the top surface of the low emissivity layer; an optional step of cutting, edge seaming, grinding, washing and/or drying the low-emissivity coated glass with the pressure-sensitive adhesive tape adhered thereto; and removing the pressure-sensitive adhesive tape from low-emissivity layer to provide the glass unit, wherein the pressure-sensitive adhesive tape comprises a carrier layer and a pressure-sensitive adhesive layer, and wherein the pressure-sensitive adhesive layer comprises one or more acrylic block copolymers. It has been surprisingly found that when using acrylic block copolymers the build-up of adhesion after application is advantageously low, even upon UV exposure, which enables provision of protective sheets with excellent storability and weatherability and ensures easy removability without leaving stains or residues on Low-E coatings.

In a preferred embodiment, the pressure-sensitive adhesive layer comprises an acrylic block copolymer having a general formula (A)ₙB in which: n is an integer of greater than or equal to 1; A is an acrylic or methacrylic homo- or copolymer having a glass transition temperature (T_{g}) of more than 80°C, preferably in the range of 95 to 125°C; and B is an acrylic or methacrylic homo- or copolymer having a T_{g} of less than -10° C, preferably in the range of from -35°C to -60°C, more preferably -40 to 55°C. The glass transition temperature (T_{g}) may be determined by procedures known in the art, such as differential scanning calorimetry (DSC) in line with ASTM E1356.

It is noted that blocks A and B may independently comprise other acrylic or methacrylic co-monomers comprising one or more functional groups selected from carboxyl, amide, amine, hydroxyl, epoxy or alkoxy functional groups. In addition, block A may incorporate groups, such as acrylic acid or methacrylic acid, in order to increase the temperature stability of the co-polymer.

Preferably, the acrylic block copolymer having a general formula (A)ₙB has a structure chosen from: ABA, AB, A₃B and A₄B. Further preferably, the acrylic block copolymer is an acrylic triblock copolymer, more preferably an acrylic triblock copolymer with the structure ABA.

Examples of the acrylic or methacrylic homo- or copolymer having a T_{g} of more than 80°C preferably used as block A include, but are not limited to homo- or copolymers comprising poly(methyl methacrylate) (PMMA), poly(t-butyl methacrylate), poly(cyclohexyl acrylate), poly(acrylic acid), poly(isobornyl acrylate), poly(butyl cyanoacrylate), poly(ethyl cyanoacrylate), poly(isopropyl methacrylate), and poly(phenyl methacrylate). Especially preferred examples of homo- or copolymers used for block A include those comprising poly(methyl methacrylate).

As examples of the acrylic or methacrylic homo- or copolymer having a T_{g} of less than -10°C preferably used as block B, homo- or copolymers comprising poly(n-butyl acrylate), poly(isobutyl acrylate), poly(isodecyl acrylate), poly(n-decyl methacrylate), poly(n-hexyl acrylate), poly(2-ethylhexyl acrylate), poly(2-methoxyacryl acrylate), poly(n-propyl acrylate), poly(4-cyanobutyl acrylate), poly(decyl methacrylate), poly(dodecyl methacrylate), and poly(octyl methacrylate) may be mentioned. Especially preferred examples of homo- or copolymers used for block B include those comprising poly(butyl acrylate).

Suitable method of synthesizing the acrylic block copolymers will be known to the skilled artisan and may include living anionic polymerization techniques as disclosed in US 6,329,480 B1 or US 6,555,637 B1, for example, which allow for sequentional polymerization with very narrow molecular weight distribution (M_{w}/Mₙ ≈1.1 -1.3).

To further enhance the weatherability (e.g. resistance against UV radiation, moisture, oxygen exposure and/or elevated temperatures) and avoid excessive adhesion strength increase at longer storage periods, it is preferred that the pressure-sensitive adhesive layer is substantially free of styrene-based homo- or copolymers, further preferably free of any styrene-based homo- or copolymers. In other preferred embodiments, the pressure-sensitive adhesive layer does not comprise polymers with aromatic groups.

In especially preferred embodiments, the acrylic block copolymer is selected from any of polymethyl methacrylate/polybutyl acrylate/polymethyl methacrylate, poly(methyl methacrylate-co-methacrylic acid)/polybutyl acrylate/poly(methyl methacrylate-co-acrylic acid)/polybutyl acrylate/poly(methyl methacrylate-co-acrylic acid) and poly(methyl methacrylate-co-acrylic acid)/polybutyl acrylate/poly(methyl methacrylate-co-acrylic acid), of which polymethyl methacrylate/polybutyl acrylate/polymethyl methacrylate is particularly preferred.

In preferred embodiments, the acrylic block copolymer has a weight-average molecular weight in the range of 60 000 to 200 000 g/mol, which may be determined by procedures known in the art, including gel permeation chromatography (GPC) and mass spectrometric methods (e.g. MALDI TOF-MS).

From the viewpoint of favorable adhesion properties and enhanced releasability, the pressure-sensitive adhesive layer has a poly(methyl methacrylate) (PMMA) content of 20 to 50 wt.-% based on the total weight of acrylic polymers, preferably at a content of more than 24 wt.-% and less than 45 wt.-%, each based on the total weight of acrylic polymers. The desired PMMA content range may be either achieved by suitably selecting a single block copolymer with appropriate PMMA content, by adding PMMA as a homopolymer to the pressure-sensitive adhesive composition, or by combining multiple acrylic block copolymers with different PMMA contents to fine-tune the specified PMMA content based on the total weight of block copolymers. In preferred embodiments, the adhesive layer comprises a combination of multiple different acrylic block copolymers, further preferably two different acrylic block copolymers, wherein at least one of them is an acrylic triblock copolymer.

The thickness of the pressure-sensitive adhesive layer may be appropriately selected by the skilled artisan. Preferred thicknesses range from 0.1 to 50 µm, further preferably from 0.5 to 30 µm, especially preferably from 1 to 20 µm, such as from 1.5 to 10 µm.

The pressure-sensitive adhesive layer according to the first embodiment preferably exhibits an initial adhesion strength of 50 to 300 cN/20 mm, and an adhesion strength of 50 to 400 cN/20 mm 7 days after application, the adhesive strengths each being measured on BA steel at a peel speed of 300 mm/min according to EN 1939 at a temperature of 23 ± 2 degrees. The initial adhesive strength is typically measured within a time frame of up to 20 min. after applying the tape onto the BA steel substrate, preferably 15 min. after application of the tape. For further improved releasability and storability, the pressure-sensitive adhesive tape preferably exhibits an adhesive strength in the range of 50 to 200 cN/20 mm initially and 7 days after application.

In a preferred embodiment, the pressure-sensitive adhesive layer has an initial adhesion strength of 50 to 300 cN/20 mm, preferably 50 to 250 cN/20 mm, and an adhesion strength of 50 to 400 cN/20 mm, preferably 50 to 300 cN/20 mm, 7 days after application, the adhesive strengths each being measured on BA steel at a peel speed of 300 mm/min according to EN 1939, at a temperature of 23 ± 2°C. The initial adhesive strength is typically measured within a time frame of up to 20 min. after applying the tape onto the BA steel substrate, preferably 15 min. after application of the tape. From the viewpoint of easier removability, the pressure-sensitive adhesive layer preferably exhibits an adhesive strength in the range of 50 to 200 cN/20 mm initially and 7 days after application. It has been found that a pressure-sensitive adhesive tape exhibiting these properties enables excellent storability, weatherability and removability, while still enabling effective protection of coated glass substrates from mechanical damage and corrosion.

Further properties of the pressure-sensitive adhesive tapes are discussed hereinbelow.

In the pressure-sensitive adhesive tape, the carrier layer typically also serves as the protective layer. While not being limited thereto, the carrier layer is preferably a polyolefin-based layer, and further preferably comprises polyethylene, polypropylene, or a copolymer of ethylene-propylene. The thickness of the carrier layer may be suitably selected depending on its purpose and the chosen material. In preferred embodiments, the thickness of the carrier layer is in the range of 10 to 100 µm, further preferably between 20 to 80 µm, especially preferably 30 to 60 µm, such as 40 to 50 µm. The carrier layer may be composed of a single layer or of multiple layers having different compositions.

In other preferred embodiments, the PSA protective tape further comprises a tie layer between the carrier layer and the pressure-sensitive adhesive layer, which is suitably selected by the skilled artisan from materials which control the difffusion and chemical interaction at the interface between the carrier layer and the pressure-sensitive adhesive layer so as to reduce layer delamination and to enhance the processability by coextrusion, i.e. to enable effective bonding of polymer layers in the melt during the tape fabrication process (e.g. co-extrusion of blown film, cast film, etc.). Preferred examples of tie layer materials include, but are not limited to functionalized polyolefins (by copolymerization with functional co-monomers or by grafting, e.g. with anhydrides or acetates). Further preferred exemplary materials include polyethylene grafted with maleic anhydride, ethylene-vinyl acetate (EVA) copolymers, ethylene-acrylic acid copolymer, ethylene-methyl acrylate copolymer, and glycidyl methacrylate grafted polyethylene. The thickness of the tie layer is selected depending on the combination of layer materials and the required mechanical properties. Typically, the thickness of the tie layer is smaller than that of the carrier layer or the adhesive layer and/or preferably in the range of 0.5 to 15 µm, preferably 2 to 10 µm, more preferably 3 to 4 µm.

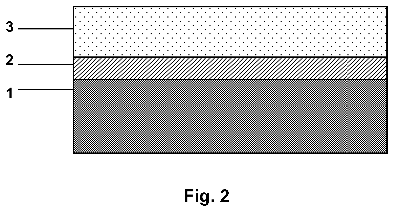

It will be understood that the pressure-sensitive adhesive tape used according to the present invention may comprise further layers interposed between the adhesive layer and the carrier layer. However, in terms of simplicity and low manufacturing costs, it is preferred that the PSA tape has a three layer-configuration consisting of the carrier layer (1), the tie layer (2) and the pressure-sensitive adhesive layer (3), as illustrated in Fig. 2. While the protective tape is usually provided in a roll with the adhesive layer in direct contact with the carrier layer, the tape may also comprise a release liner attached onto the adhesive layer, which may be composed of suitable materials known in the art.

As long as it does not impart their functionality, the PSA adhesive layer, the carrier layer and/or the optional tie layer may independently comprise further additives selected from an inorganic fillers (e.g., silica, talc, kaolin, calcium carbonate, carbon black, titanium oxides), color pigments (for example, to make it simpler for operators to identify whether and where the protective sheet is applied), antistatic agents, antioxidants, tackifiers, or plasticizers.

Advantageously, the PSA protective tapes may be easily produced in widths of more than 2.85 m, preferably of at least 3 m or at least 3.10 m, more preferably of at least 3.20 m, which enables efficient protection of large coated glass sheets against corrosion and/or mechanical damage without having to apply multiple protective sheets in an overlapping manner and a liquid coating at the area of the joints.

While the method of producing the multilayer PSA tapes is in principle not particularly limited and may involve bonding of the tape layers in the solid state, e.g. by adhesion lamination, extrusion lamination or thermal lamination, the preferred method involves bonding of the constituent layers in in the melt during fabrication, preferably by coextrusion methods known in the art (e.g. blow film, cast film, etc.).

Preferably, the method comprises blow film co-extruding the materials constituting the tape layers to provide the pressure-sensitive adhesive tape.

Under environmental aspects and in oder to keep the energy expenditure and processing costs low, this process is preferably carried out without use of organic solvents.

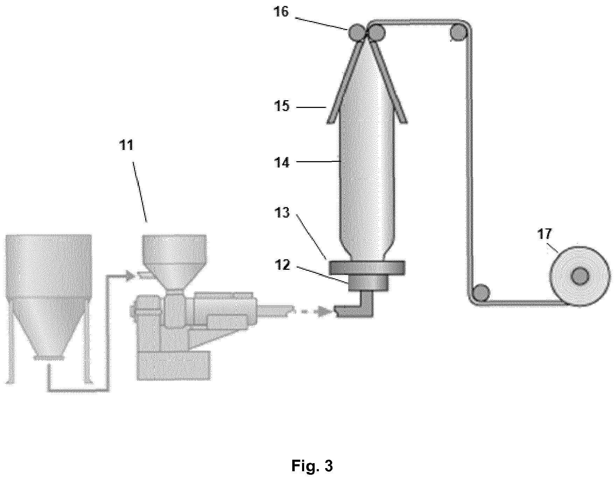

Fig. 3 illustrates an exemplary blow film coextrusion process and the used equipment. Herein, plastic melts are coextruded in a coextrusion unit (11), which utilizes two or more extruders to melt and deliver a steady volumetric throughput of different viscous plastics vertically to a single die (12) to form a thin walled tube. Air is introduced in the center of the die to blow up the tube to a bubble (14). The air ring (13) blows onto the hot film to cool it (outside and within the tube). The tube passes a collapsing frame (15) where is flattened. Nip rolls (16) at the top of the device open to allow a startup knot through them, while also opening the tops of the collapsing frame (15) below. The collapsed tube is taken back down the extrusion tower via more nip rollers. On winder the tube or film is wound into rolls (17).

Said method enables quick, simple manufacture of high-quality protective multilayer tapes in widths of more than 2.85 m, preferably of at least 3 m or at least 3.10 m, more preferably of at least 3.20 m, taking into account that large-sized glass substrates (also known as "Jumbo"-sized glass) are typically provided in dimensions of 6 x 3.21 m, 8 x 3.21 or 8 x 3.3 m ("XL glass") .

The method of producing a glass unit begins with a step of coating a glass substrate with a low-E coating. The low-E coating is typically a multi-layer coating which includes at least one IR reflecting layer of a material such as silver that is sandwiched between at least a pair of dielectric layers. Exemplary low-E coatings include, but are not limited to single silver, double silver or triple silver coating stacks, or coatings disclosed in WO 9925661, WO 2005/012200 A1, WO 2006/122900 A1, WO 2007/138097 A1, WO 2011/147875 A1, WO 2011/147864 A1, WO 2013/079400 A1, WO 2014/191472 A1, WO 2014/191474 A1, WO 2014/191484,or WO 2016/139318, for example. After applying the low-E coatings to the glass substrate (typically via sputtering methods), the PSA protective tape of is adhered to the top of the low-E coating via the pressure-sensitive adhesive layer. If the PSA protective tape is provided in a roll, the tape may be fed from the roll through a nip between a biasing roller and the coated glass substrate with the low-E coating thereon, wherein the roller presses and thus adheres the tape onto the coated substrate. With the protective PSA layer applied over the low-E coating, the coated glass substrate may then be stored (e.g. in a rack of multiple coated glass substrates) and/or shipped to the IG unit manufacturer. At the IG fabrication unit, the coated glass substrates may be then processed with the protective sheet thereon. Usually, these processing steps may include steps of cutting, edge seaming, grinding, washing (e.g. with water and optionally soap) and/or drying. Thereafter, the protective PSA sheet is peeled off the coated glass substrate by an operator or robot and the coated glass substrate is ready to be used or to be processed in a heat treating furnace (e.g.,tempering and/or bending furnace). After the optional heat treatment, the coated glass substrate may be coupled to further glass or plastic sheets through spacers and/or sealants, with a gas (e.g. air or argon) inbetween, to form an IG window unit.

Another embodiment of the present invention relates to the use of the pressure-sensitive adhesive tape described above as a protective sheet for low-emissivity coated glass, e.g. during the manufacture of IG window units. As is understood from the explanations above, the pressure-sensitive adhesive tape effectively protects coated glass surfaces from corrosion and mechanical and chemical damage during IG manufacturing, provides for a prolonged storability of the coated glass substrate, enables simple and swift removal without anchorage failure, exhibits excellent weatherability (e.g. resistance against UV radiation, moisture, oxygen exposure and/or elevated temperatures) and maintains favourable adhesion properties even after or during submersion under water or other (washing) fluids.

### EXAMPLES

Abbreviations used in the following description for commercially available products will be explained in the following.

M75MST (30% pMMA, PDI 1.5, M_{w} ≈ 167 000 g/mol), MS50 (~45 % pMMA, PDI 1.3, M_{w} ≈ 92 000 g/mol), M75PE (30% pMMA, PDI 1.5, M_{w} ≈ 168 000 g/mol), and M53PE (50% pMMA, PDI 1.5, M_{w} ≈ 129 000 g/mol) denote acrylic triblock copolymers of the Nanostrength^{®} range commercially available from Arkema, France.

LA2140 (24% pMMA, PDI 1.1, M_{w} ≈ 75 000 g/mol), LA2330 (24% pMMA, PDI 1.1, M_{w} ≈ 117 000 g/mol), LA2250 (30% pMMA, PDI 1.1, M_{w} ≈ 63 000 g/mol), LA2270 (>30% pMMA, PDI 1.1, M_{w} ≈ 66 000 g/mol), LA4285 (>30% pMMA, PDI 1.1, M_{w} ≈ 62 000 g/mol) denote acrylic triblock copolymers of the Kurarity^{™} range commercially available from Kuraray, Inc.

M100, P100, P125 and P140 are hydrogenated hydrocarbon resins commercially available from Arakawa Chemical under the Arkon* brand.

G1652 and G1657 are linear SEBS block copolymers, commercially available by Kraton Polymers.

W90 and W140 are styrenic monomer resins from the Cleartack^{®} range, commercially available from Total Cray Valley, Inc.

### Adhesion Performance on Coated Glass Surfaces

In order to test the adhesion properties and the correlation between adhesion on BA steel and a typical coated glass substrate surface, protective PSA tapes comprising a PE carrier layer (thickness of 41-42 µm), a tie layer (polyethylene grafted with maleic acid anhydride, having a thickness of 3~4 µm) and a pressure-sensitive adhesive layer (thickness of 5 µm) having the compositions shown in Table 1 have been prepared.

**TABLE 1**

| | Acrylic Block Copolymer 1 | | Acrylic Block Copolymer 2 | | pMMA content (% based on total weight of polymers) |
|---|---|---|---|---|---|
| | Type | content (pts. per weight) | Type | content (pts. per weight) | |
| Example 1 | M75MST | 100 | S55MST | 100 | 38 |
| Example 2 | M75PE | 100 | S55MST | 50 | 35 |
| Example 3 | M75MST | 100 | MS50 | 50 | 35 |
| Example 4 | M75PE | 100 | MS50 | 75 | 36 |
| Example 5 | LA2250 | 100 | - | - | 30 |
| Example 6 | LA2140 | 100 | LA4285 | 50 | 33 |
| Example 7 | M75MST | 100 | LA2270 | 100 | 33 |
| Example 8 | M75MST | 100 | M53PE | 50 | 37 |
| Example 9 | LA2330 | 100 | MS50 | 120 | 35 |

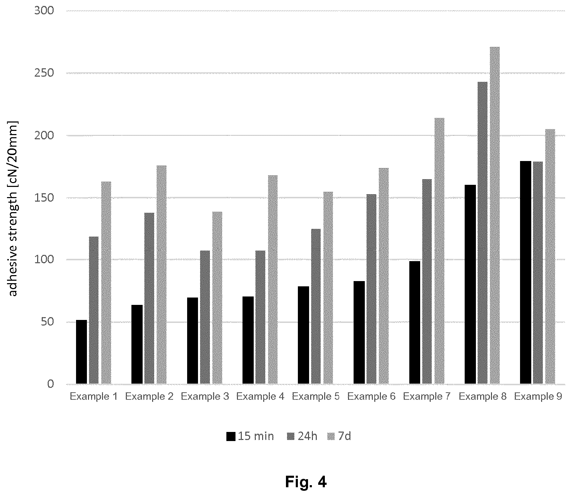

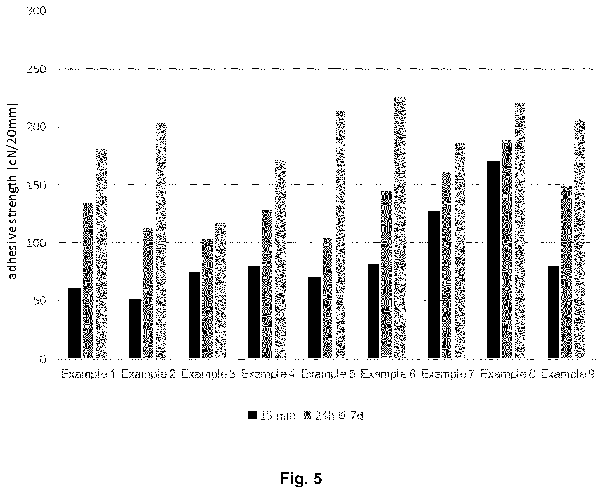

Upon preparation of the tapes, their adhesive strength on BA steel has been measured at a peel speed of 300 mm/min according to EN 1939 at a temperature of 23 ± 2°C at different times, i.e. 15 min, 1 day and 7 days after application of the tape. The results of the measurement are shown in Fig. 4. An analogous measurement has been peformed using low-E-coated glass (commercially obtained by Guardian Glass, Inc.) as substrate instead of BA steel, the results of which are shown in Fig. 5. A comparison between the diagrams shows that a good correlation exists between the adhesion performances on BA steel surfaces and the low-E coated surfaces. Last but not least, Figures 4 and 5 show that the adhesion strength increase during the period of 7 days is maintained at a favourably low level, which indicates excellent peel properties, handling and storability.

### Adhesion Build-Up & Storability

In a further series of experiments, the adhesive performance of sample tapes having a configuration according to Examples 1 to 9 (Examples 10 to 14) has been tested in comparison with protective adhesive tapes comprising SEBS in a 5 µm thick PSA layer instead of acrylic block polymers and a 45 µm thick PE carrier layer (Comparative Example 1). Specifically, the adhesive compositions shown in Table 2 have been used:

**TABLE 2**

| | Base Polymer | | Additive 1 | | Additive 2 | |
|---|---|---|---|---|---|---|
| | Type | content (pts. per weight) | Type | content (pts. per weight) | Type | content (pts. per weight) |
| Example 10 | M75MST | 100 | S55MST | 50 | - | - |
| Example 11 | M75MST | 100 | MS50 | 50 | - | - |
| Example 12 | M75MST | 100 | M53PE | 50 | - | - |
| Example 13 | M75MST | 100 | LA2270 | 75 | - | - |
| Example 14 | M75MST | 100 | LA4285 | - | - | - |
| Comparative Example 1 | G1652 | 100 | P140 | 20 | W140 | 20 |

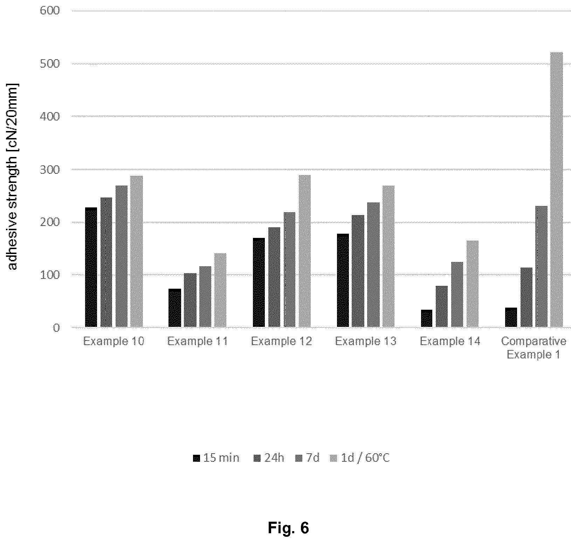

In line with Examples 1 to 9, the adhesive strength of the samples on BA steel has been measured at a peel speed of 300 mm/min according to EN 1939 at a temperature of 23 ± 2°C at different times, i.e. 15 min, 1 day and 7 days after application of the tape, and additionally after 1 day of exposure to an elevated temperature of 60°C. The results of the measurements are shown in Fig. 6. It is shown that the SEBS-based adhesive tape of Comparative Example 1 displays an increase in peel adhesion over prolonged periods to unacceptable levels (an effect which is further magnified upon treatment at elevated temperatures), even if a tape with an initial adhesion strengh lower than 50 cN/20mm is used. On the other hand, the adhesion strength of Examples 10 to 14 is maintained at a favourably low level even after thermal exposure.

### High Speed Removability

Measurements according to Examples 1 to 9 (BA steel) have been conducted by using the adhesive formulations of Table 3 at different peel speeds, i.e. at 300 mm/min, 3 m/min and 30 m/min.

**TABLE 3**

| | Base Polymer | | Additive 1 | | Additive 2 | |
|---|---|---|---|---|---|---|
| | Type | content (pts. per weight) | Type | content (pts. per weight) | Type | content (pts. per weight) |
| Example 15 | M75MST | 100 | S55MST | 100 | - | - |
| Example 16 | M75MST | 100 | M53PE | 100 | - | - |
| Example 17 | M75MST | 100 | LA2270 | 100 | - | - |
| Example 18 | M75PE | 100 | MS50 | 75 | - | - |
| Example 19 | M75PE | 100 | LA2270 | 100 | - | - |
| Example 20 | LA2140 | 100 | S55MST | 150 | - | - |
| Comparative Example 2 | G1657 | 100 | P100 | 6 | - | - |
| Comparative Example 3 | G1657 | 100 | P100 | 40 | D940 | 1 |

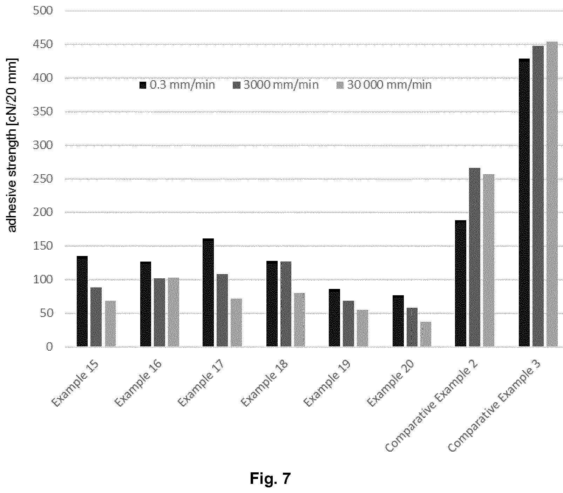

The tapes of Examples 15 to 20 exhibit the same configuration as Examples 1 to 9, and Comparative Examples 2 and 3 comprise 5 µm thick PSA layer and 45 µm thick PE carrier layer. The results shown in Fig. 7 demonstrate that the PSA tapes exhibit an excellent removability at high peel speeds, typically showing a decrease in adhesive strength upon increasing the peel speed. On the other hand, the SEBS-based tape formulations of Comparative Examples 2 and 3 display an increase in peel strength at higher peel speeds.

### Weatherability

The weathering resistance of different PSA protective tapes has been evaluated by performing peel adhesion measurements according to Examples 1 to 9, upon subjecting the samples to UV irradiation according to the ISO 4892-2 protocol. As samples, adhesive tapes with the acrylic triblock copolymer M75PE (Example 21, prepared according to Examples 1 to 9), a SEBS-based adhesive, i.e. G1652 (100 pt.) + P100 (20 pt.) (Comparative Example 4, prepared according to Comparative Examples 1 to 3) and a commercially available acrylic-based protection tape, i.e. Nitto CGP 551 (Comparative Example 5) have been used.

The results of the measurements are shown in the following table.

**TABLE 4**

| | UV treatment (ISO 4892-2) | | | |
|---|---|---|---|---|
| | 50 h | 100 h | 200 h | 400 h |
| Example 21 | + | + | + | + |
| Comparative Example 4 | + | O | - | - |
| Comparative Example 5 | + | + | O | O |

| | | | | |
|---|---|---|---|---|
| "+" = good peel properties, "○" = acceptable peel properties, and "-" = poor peel properties. | | | | |

Herein, it is demonstrated that the protective tapes used in the present invention display superior weatherability and resistance towards excessive adhesive strength decrease due to UV irradiation. Thus, the tapes may be stored for a prolonged period of time and at harsher conditions when compared to conventional protective tapes while widely maintaining their peel properties.

Once given the above disclosure, many other features, modifications, and improvements will become apparent to the skilled artisan.

### REFERENCE NUMERALS

- 1:: carrier layer
- 2:: (optional) tie layer
- 3:: pressure-sensitive adhesive layer
- 11:: (co)-extruder unit
- 12:: die
- 13:: air ring
- 14:: bubble
- 15:: collapsing frame
- 16:: nip rolls
- 17:: rolled film

## Claims

1. A method of producing a glass unit, the method comprising:
providing a low emissivity layer on a glass substrate;
adhering a pressure-sensitive adhesive tape to the top surface of the low emissivity layer;
an optional step of cutting, edge seaming, grinding, washing and/or drying the low-emissivity coated glass with the pressure-sensitive adhesive tape adhered thereto; and
removing the pressure-sensitive adhesive tape from low-emissivity layer to provide the glass unit,
wherein the pressure-sensitive adhesive tape for temporary protection comprises a carrier layer and a pressure-sensitive adhesive layer, the pressure-sensitive adhesive layer comprising one or more acrylic block copolymers.

2. The method of producing a glass unit according to claim 1, wherein the pressure-sensitive adhesive layer comprises an acrylic block copolymer having a general formula (A)ₙB in which:
n is an integer of greater than or equal to 1;
A is an acrylic or methacrylic homo- or copolymer having a T_{g} of more than 80°C, preferably in the range of 95 to 125°C; and
B is an acrylic or methacrylic homo- or copolymer having a T_{g} of less than -10° C, preferably in the range of from -35°C to -60°C, more preferably from -40 to -55°C, wherein Tg is determined as described in the description.

3. The method of producing a glass unit according to any of claims 1 or 2, wherein the pressure-sensitive adhesive layer comprises a combination of multiple acrylic block copolymers, at least one of them being an acrylic triblock copolymer.

4. The method of producing a glass unit according to any of claims 1 to 3, wherein the acrylic block copolymer is selected from any of polymethyl methacrylate/polybutyl acrylate/polymethyl methacrylate, poly(methyl methacrylate-co-methacrylic acid)/polybutyl acrylate/poly(methyl methacrylate-co-acrylic acid)/polybutyl acrylate/poly(methyl methacrylate-co-acrylic acid) and poly(methyl methacrylate-co-acrylic acid)/polybutyl acrylate/poly(methyl methacrylate-co-acrylic acid).

5. The method of producing a glass unit according to any of claims 1 to 4, wherein the pressure-sensitive adhesive layer has a polymethyl methacrylate content of 20 to 50 wt.-% based on the total weight of acrylic block copolymers, preferably at a content of more than 24 wt.-% and less than 45 wt.-%, each based on the total weight of acrylic block copolymers.

6. The method of producing a glass unit according to any of claims 1 to 5, wherein the acrylic block copolymer has a weight-average molecular weight in the range of 60 000 to 200 000 g/mol, as determined by the method defined in the description.

7. The method of producing a glass unit according to any of claims 1 to 6, wherein the carrier layer comprises a polyolefin.

8. The method of producing a glass unit according to any of claims 1 to 7, wherein the pressure-sensitive adhesive tape further comprises a tie layer between the carrier layer and the pressure-sensitive adhesive layer, the tie layer preferably comprising ethylene-vinyl acetate or polyethylene-grafted maleic anhydride.

9. The method of producing a glass unit according to any of claims 1 to 8, wherein the thickness of the carrier layer is between 10 and 100 µm and/or wherein the thickness of the adhesive layer is between 1 and 10 µm.

10. The method of producing a glass unit according to any of claims 1 to 9, the method further comprising a step of co-extruding the materials constituting the tape layers to provide the pressure-sensitive adhesive tape, preferably blow film co-extruding or cast film co-extruding.

11. Use of a pressure-sensitive adhesive tape comprising a carrier layer and a pressure-sensitive adhesive layer as a protective sheet for low emissivity-coated glass, wherein the pressure-sensitive adhesive layer comprises one or more acrylic block copolymers.

12. Glass unit comprising a glass substrate with a low emissivity coating and a pressure-sensitive adhesive tape provided on the low emissivity coating for temporary protection, the pressure-sensitive adhesive tape comprising a carrier layer and a pressure-sensitive adhesive layer, wherein the pressure-sensitive adhesive layer comprises one or more acrylic block copolymers.

## Patentansprüche

1. Verfahren zur Herstellung einer Glaseinheit, umfassend:
Aufbringen einer Niedrigemissionsschicht auf ein Glassubstrat;
Aufkleben eines Haftklebebandes auf die Oberfläche der Niedrigemissionsschicht;
einen optionalen Schritt des Schneidens, Kantensäumens, Schleifens, Waschens und/oder Trocknens des beschichteten Niedrigemissionsglases und dem darauf haftenden Haftklebeband; und
Entfernen des Haftklebebandes von der Niedrigemissionsschicht, um die Glaseinheit herzustellen,
wobei das Haftklebeband zum temporären Schutz eine Trägerschicht und eine Haftklebeschicht umfasst, und wobei die Haftklebeschicht ein oder mehrere Acrylblockcopolymere enthält.

2. Verfahren zur Herstellung einer Glaseinheit nach Anspruch 1, wobei die Haftklebeschicht ein Acrylblockcopolymer der allgemeinen Formel (A)ₙB enthält, worin:
n eine Ganzzahl größer oder gleich 1 ist;
A ein Acryl- oder Methacryl-Homo- oder Copolymer mit einer T_{g} von über 80 °C, vorzugsweise im Bereich von 95 bis 125 °C ist; und
B ein Acryl- oder Methacryl-Homo- oder Copolymer mit einer T_{g} von weniger als -10 °C ist, vorzugsweise im Bereich von -35 °C bis -60 °C, besonders bevorzugt von -40 bis -55 °C, wobei T_{g} gemäß Beschreibung bestimmt wird.

3. Verfahren zur Herstellung einer Glaseinheit nach einem der Ansprüche 1 oder 2, wobei die Haftklebstoffschicht eine Kombination mehrerer Acrylblockcopolymere umfasst, von denen mindestens eines ein Acryl-Triblockcopolymer ist.

4. Verfahren zur Herstellung einer Glaseinheit nach einem der Ansprüche 1 bis 3, wobei das Acrylblockcopolymer ausgewählt ist aus Polymethylmethacrylat/Polybutylacrylat/Polymethylmethacrylat, Poly(methylmethacrylat-co-methacrylsäure)/Polybutylacrylat/Poly(methylmethacrylat-co-acrylsäure)/Polybutylacrylat/ (methylmethacrylat-co-acrylsäure) oder Poly(methylmethacrylat-co-acrylsäure)/ Polybutylacrylat/Poly(methylmethacrylat-co-acrylsäure).

5. Verfahren zur Herstellung einer Glaseinheit nach einem der Ansprüche 1 bis 4, wobei die Haftklebstoffschicht einen Polymethylmethacrylatgehalt von 20 bis 50 Gew.-%, bezogen auf das Gesamtgewicht der Acrylblockcopolymere, aufweist, vorzugsweise einen Gehalt von mehr als 24 Gew.-% und weniger als 45 Gew.-%, jeweils bezogen auf das Gesamtgewicht der Acrylblockcopolymere.

6. Verfahren zur Herstellung einer Glaseinheit nach einem der Ansprüche 1 bis 5, wobei das Acrylblockcopolymer ein gewichtsmittleres Molekulargewicht im Bereich von 60000 bis 200000 g/mol aufweist, bestimmt nach dem in der Beschreibung definierten Verfahren.

7. Verfahren zur Herstellung einer Glaseinheit nach einem der Ansprüche 1 bis 6, wobei die Trägerschicht ein Polyolefin umfasst.

8. Verfahren zur Herstellung einer Glaseinheit nach einem der Ansprüche 1 bis 7, wobei das Haftklebeband zusätzlich eine Verbindungsschicht zwischen der Trägerschicht und der Haftklebstoffschicht umfasst, welche vorzugsweise Ethylen-Vinylacetat oder Polyethylengepfropftes Maleinsäureanhydrid umfasst.

9. Verfahren zur Herstellung einer Glaseinheit nach einem der Ansprüche 1 bis 8, wobei die Dicke der Trägerschicht zwischen 10 und 100 µm und/oder die Dicke der Klebstoffschicht zwischen 1 und 10 µm beträgt.

10. Verfahren zur Herstellung einer Glaseinheit nach einem der Ansprüche 1 bis 9, wobei das Verfahren zur Herstellung des Haftklebebandes ferner einen Schritt der Co-Extrusion der Materialien, aus denen die Bandschichten bestehen, umfasst, vorzugsweise Blasfolien-Co-Extrusion oder Gießfolien-Co-Extrusion.

11. Use of a pressure-sensitive adhesive tape comprising a carrier layer and a pressure-sensitive adhesive layer as a protective sheet for low emissivity-coated glass, wherein the pressure-sensitive adhesive layer comprises one or more acrylic block copolymers.
11. Verwendung eines Haftklebebandes, bestehend aus einer Trägerschicht und einer Haftklebeschicht, als Schutzfolie für Niedrigemissionsglas, wobei die Haftklebeschicht ein oder mehrere Acrylblockcopolymere enthält.

12. Glaseinheit, bestehend aus einem Glassubstrat mit einer Niedrigsemissionsbeschichtung und einem auf der Niedrigsemissionsbeschichtung aufgebrachten Haftklebeband zum temporären Schutz, wobei das Haftklebeband aus einer Trägerschicht und einer Haftklebeschicht besteht, wobei die Haftklebeschicht ein oder mehrere Acrylblockcopolymere enthält.

## Revendications

1. Procédé de production d'une unité de verre, le procédé comprenant :
la fourniture d'une couche à faible émissivité sur un substrat en verre ;
le fait de faire adhérer un ruban adhésif sensible à la pression sur la surface de dessus de la couche de faible émissivité ;
une étape facultative consistant à découper, polir les arêtes, meuler, laver et/ou sécher le verre revêtu à faible émissivité sur lequel on a fait adhérer le ruban adhésif sensible à la pression ; et
l'élimination du ruban adhésif sensible à la pression de la couche à faible émissivité afin de fournir l'unité de verre,
dans lequel le ruban adhésif sensible à la pression de protection temporaire comprend une couche support et une couche d'adhésif sensible à la pression, la couche d'adhésif sensible à la pression comprenant un ou plusieurs copolymères à blocs acryliques.

2. Procédé de production d'une unité de verre selon la revendication 1, dans lequel la couche d'adhésif sensible à la pression comprend un copolymère à blocs acryliques de formule générale (A)ₙB dans laquelle :
n est un entier supérieur ou égal à 1 ;
A est un homopolymère ou un copolymère acrylique ou méthacrylique ayant une température T_{g} supérieure à 80 °C, de préférence dans la plage de 95 à 125 C ; et
B est un homopolymère ou un copolymère acrylique ou méthacrylique ayant une température T_{g} inférieure à -10 °C, de préférence dans la plage de -35 °C à - 60 °C, plus préférablement de -40 à -55 °C, dans lequel T_{g} est déterminée come décrit dans la description.

3. Procédé de production d'une unité de verre selon l'une quelconque des revendications 1 ou 2, dans lequel la couche d'adhésif sensible à la pression comprend une combinaison de multiples copolymères à blocs acryliques, l'un d'entre eux au moins étant un copolymère à trois blocs acryliques.

4. Procédé de production d'une unité de verre selon l'une quelconque des revendications 1 à 3, dans lequel le copolymère à blocs acryliques est choisi parmi l'un quelconque d'un poly(méthacrylate de méthyle)/poly(acrylate de butyle)/poly(méthacrylate de méthyle), poly(méthacrylate de méthyle-co-acide méthacrylique)/poly(acrylate de butyle)/poly(méthacrylate de méthyle-co-acide acrylique)/poly(acrylate de butyle)/poly(méthacrylate de méthyle-co-acide acrylique) et poly(méthacrylate de méthyle-co-acide acrylique)/poly(acrylate de butyle)/poly(méthacrylate de méthyle-co-acide acrylique).

5. Procédé de production d'une unité de verre selon l'une quelconque des revendications 1 à 4, dans lequel la couche d'adhésif sensible à la pression a une teneur en poly(méthacrylate de méthyle) de 20 à 50 % en poids sur la base du poids total de copolymères à blocs acryliques, de préférence à hauteur d'une teneur supérieure à 24 % en poids et inférieure à 45 % en poids, chacune sur la base du poids total de copolymères à blocs acryliques.

6. Procédé de production d'une unité de verre selon l'une quelconque des revendications 1 à 5, dans lequel le copolymère à blocs acryliques a une masse moléculaire en poids dans la plage de 60 000 à 200 000 g/mol, ainsi que déterminé par la méthode définie dans la description.

7. Procédé de production d'une unité de verre selon l'une quelconque des revendications 1 à 6, dans lequel la couche support comprend une polyoléfine.

8. Procédé de production d'une unité de verre selon l'une quelconque des revendications 1 à 7, dans lequel le ruban adhésif sensible à la pression comprend en outre une couche de liaison entre la couche support et la couche d'adhésif sensible à la pression, la couche de liaison comprenant de préférence de l'éthylène-acétate de vinyle ou du polyéthylène sur lequel est greffé de l'anhydride maléique.

9. Procédé de production d'une unité de verre selon l'une quelconque des revendications 1 à 8, dans lequel l'épaisseur de la couche support est entre 10 et 100 µm et/ou dans lequel l'épaisseur de la couche adhésive est entre 1 et 10 µm.

10. Procédé de production d'une unité de verre selon l'une quelconque des revendications 1 à 9, le procédé comprenant en outre une étape de coextrusion des matériaux constituant les couches de ruban afin de fournir le ruban adhésif sensible à la pression, de préférence de la coextrusion de films soufflés ou la coextrusion de films coulés.

11. Utilisation d'un ruban adhésif sensible à la pression comprenant une couche support et une couche d'adhésif sensible à la pression en tant que feuille protectrice pour du verre revêtu à faible émissivité, dans laquelle la couche d'adhésive sensible à la pression comprend un ou plusieurs copolymères à blocs acryliques.

12. Unité de verre comprenant un substrat en verre avec un revêtement à faible émissivité et un ruban adhésif sensible à la pression fourni sur le revêtement à faible émissivité en vue d'une protection temporaire, le ruban d'adhésif sensible à la pression comprenant une couche support et une couche d'adhésif sensible à la pression, dans laquelle la couche d'adhésif sensible à la pression comprend un ou plusieurs copolymères à blocs acryliques.
